(19)

Europäisches Patentamt
European Patent Office
Office européen des brevets

(11) **EP 3 524 959 A1**

(12) **EUROPEAN PATENT APPLICATION**
published in accordance with Art. 153(4) EPC

(43) Date of publication:
**14.08.2019 Bulletin 2019/33**

(51) Int Cl.:
*G01N 3/00* (2006.01)    *G06F 17/50* (2006.01)

(21) Application number: **17858505.5**

(22) Date of filing: **05.10.2017**

(86) International application number:
**PCT/JP2017/036383**

(87) International publication number:
**WO 2018/066669 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.10.2016 JP 2016197462**

(71) Applicant: **Nippon Steel & Sumitomo Metal Corporation**
**Tokyo 100-8071 (JP)**

(72) Inventors:
• **AITOH, Takahiro**
  **Tokyo 100-8071 (JP)**
• **HAMADA, Koichi**
  **Tokyo 100-8071 (JP)**
• **KASEDA, Yoshiyuki**
  **Tokyo 100-8071 (JP)**

(74) Representative: **Vossius & Partner**
**Patentanwälte Rechtsanwälte mbB**
**Siebertstrasse 3**
**81675 München (DE)**

(54) **FRACTURE DETERMINATION DEVICE, FRACTURE DETERMINATION PROGRAM, AND METHOD THEREOF**

(57)    This fracture determination device 1 is provided with: an element extraction unit 22 which extracts elements included in the heat affected zone formed around a spot weld in a steel material; a reference forming limit value generation unit 23 which generates a reference forming limit value depending on sheet thickness and material property of the heat affected zone on the basis of reference forming limit value information; a heat affected zone forming limit value generation unit 24 which uses the tensile strength of the steel material and element size to change the reference forming limit value, predict the forming limit value for the element size and generated a forming limit value in the heat affected zone; an analysis running unit 25 which runs a deformation SIM using input information and which outputs deformation information including maximum principal strain and minimum principal strain of each of the elements; a principal strain determination unit 26 which determines the maximum principal strain and the minimum principal strain of each of the elements included in the deformation information; and a fracture determination unit 27 which, on the basis of the determined maximum principal strain and minimum principal strain of each of the elements and the forming limit value in the heat affected zone, determines whether each element calculated in the deformation SIM will fracture.

FIG. 3

```
                    START
S101   ACQUIRE INPUT INFORMATION
S102   ACQUIRE REFERENCE FORMING LIMIT VALUE
       INFORMATION
S103   EXTRACTION OF ELEMENT INCLUDED IN HAZ
       PORTION
S104   GENERATION OF REFERENCE FORMING LIMIT VALUE
S105   GENERATION OF HEAT AFFECTED ZONE FORMING
       LIMIT VALUE
S106   RUN FEM SIMULATION
S107   DETERMINE MAXIMUM PRINCIPAL STRAIN AND
       MINIMUM PRINCIPAL STRAIN
S108   WILL ELEMENT FRACTURE?          NO
              YES
S109   OUTPUT ELEMENT FRACTURE INFORMATION
S110   OUTPUT DEFORMATION INFORMATION
S111   IS SIMULATION TERMINATION            NO
       CONDITION ESTABLISHED?
              YES
                    END
```

EP 3 524 959 A1

**Description**

FIELD

The present invention relates to a fracture determination device, a fracture determination program, and a method thereof.

BACKGROUND

In recent years, application of a high-strength steel sheet to an automobile body has been spreading rapidly, by a demand for safety from collision and a reduction in weight. The high-strength steel sheet used for an automobile body has increased breaking strength as well as having increased absorption energy at the time of collision without increasing sheet thickness. However, as the strength of a steel sheet becomes higher, the ductility of the steel sheet decreases, and therefore the steel sheet will fracture at the time of press molding and at the time of collision deformation of a vehicle, such as an automobile. In order to determine the state of a steel sheet at the time of press molding and at the time of collision deformation, the needs for a collision deformation analysis with a high accuracy by a finite element method (FEM) and fracture determination have increased.

Further, as a joining method of steel sheets in the vehicle assembly process of an automobile or the like, a spot weld is used. It is known that a heat affected zone also referred to as a HAZ (Heat Affected Zone) portion is formed around the spot weld portion in a member assembled by the spot weld. The strength of the HAZ portion may decrease due to the influence of heating by the spot weld. When the strength of the HAZ portion decreases, strain concentrates at the time of collision deformation and fracture may occur from the HAZ portion. Thus, it is requested to predict fracture of the HAZ portion at the time of collision deformation with a high accuracy and the accuracy of the collision deformation analysis of an automobile may be improved.

For example, Patent Document 1 has described a technique to predict fracture of the HAZ portion on the basis of a master curve indicating a relationship between material parameters calculated from the mechanical characteristics, chemical components, and so on of the HAZ portion and strain. With the technique described in Patent Document 1, a fracture determination value with a high accuracy may be predicted without performing a fracture determination value calculating process also for a member composed of a type of steel whose fracture strain is not calculated yet. However, when fracture of the HAZ portion is predicted in the collision deformation analysis using the FEM, the strain of the HAZ portion differs depending on the element size, and therefore there is such a problem that the timing at which it is determined that the HAZ portion fractures differs depending on the element size.

In order to solve such a problem, a technique is known which creates an analysis model for each element size, performs arithmetic operation to obtain fracture strain in each model, and predicts fracture of the HAZ portion from a relationship between a parameter specifying the element size and fracture strain (for example, see Patent Document 2). With the technique described in Patent Document 2, arithmetic operation to obtain fracture strain of the HAZ portion irrespective of the element size may be performed by finding the value of the element size parameter from the relationship between the parameter specifying the element size and fracture strain.

[CITATION LIST]

[PATENT LITERATURE]

[PTL 1] Japanese Unexamined Patent Publication (Kokai) No. 2012-132902
[PTL 2] Japanese Unexamined Patent Publication (Kokai) No. 2008-107322

SUMMARY

[TECHNICAL PROBLEM]

However, with the technique described in Patent Document 2, when fracture prediction is performed for a type of steel for which arithmetic operation to obtain fracture strain has not been performed yet, processing to perform arithmetic operation to obtain a fracture determination value before performing fracture prediction is necessary, and therefore it is not easy to apply the technique to the collision deformation analysis of a vehicle, such as an automobile. The processing to perform arithmetic operation to obtain a fracture determination value requires a vast amount of work, and therefore the fracture determination value for all the spot weld points, normally thousands of points in number, of a vehicle, such as an automobile are never determined.

An object of the present invention is to provide a fracture determination device capable of appropriately predict fracture of a heat affected zone irrespective of the element size in the deformation analysis using the FEM when a member including many heat affected zones, for example, a vehicle, such as an automobile, deforms at the time of collision.

[SOLUTION TO PROBLEM]

The gist of the present invention which solves such problems is a fracture determination device, a fracture determination program, and a fracture determination method, to be described below.

(1) A fracture determination device including:

a storage unit which stores element input information indicating material property and sheet thickness of a steel material having a heat affected zone and an element size in an analysis model used for a deformation analysis of the steel material by a finite element method, and reference forming limit value information indicating a reference forming limit value used as a forming limit value in a reference element size, which is an element size used as a reference;

an element extraction unit which extracts elements included in the heat affected zone formed around a spot weld portion of the steel material;

a reference forming limit value generation unit which generates the reference forming limit value in accordance with material property and the sheet thickness of the heat affected zone on the basis of the reference forming limit value information;

a heat affected zone forming limit value generation unit which uses tensile strength of the steel material to change the reference forming limit value, predict a forming limit value in an element size of an element included in the heat affected zone, and generate a forming limit value in the heat affected zone;

an analysis running unit which runs the deformation analysis by using the input information and outputs deformation information including strain of each element included in the heat affected zone;

a principal strain determination unit which determines maximum principal strain and minimum principal strain of each element included in the heat affected zone; and

a fracture determination unit which determines whether each element in the analysis model will fracture on the basis of maximum principal strain and minimum principal strain of each element for which the principal strain is determined and a heat affected zone forming limit line specified by the forming limit value in the heat affected zone.

(2) The fracture determination program according to (1), wherein
the element extraction unit has:

a joint element extraction unit which extracts a joint element which specifies that two steel materials be joined;

an annular ring specification unit which specifies an annular ring with a contact between the joint element and an element forming the steel material as being a center point; and

an element determination unit which determines an element at least whose part is included in the annular ring to be an element forming the heat affected zone.

(3) The fracture determination device according to (2), wherein
the reference forming limit value generation unit has:

an adjacent information acquisition unit which acquires material property and sheet thickness of the element adjacent to a contact point between the joint element and an element forming the steel material;

a material property estimation unit which estimates material property of the heat affected zone from material property acquired by the adjacent information acquisition unit; and

a forming limit value generation unit which generates the reference forming limit value in accordance with material property estimated by the material property estimation unit and sheet thickness acquired by the adjacent information acquisition unit.

(4) The fracture determination device according to any one of (1) to (3), wherein
the heat affected zone forming limit value generation unit has:

an element size determination unit which determines an element size of an element included in the heat affected zone; and
a forming limit value change unit which uses the element size and tensile strength of the steel material to change the reference forming limit value in accordance with the determined element size.

(5) The fracture determination device according to (4), wherein
the element size determination unit has:

an element size extraction unit which extracts an element size of each element included in the heat affected zone; and
an element size arithmetic operation unit which performs arithmetic operation to obtain an element size of an element included in the heat affected zone from each of the extracted element sizes.

(6) The fracture determination device according to any one of (1) to (5), wherein
the deformation analysis is a collision deformation analysis of a vehicle formed by the steel material.
(7) The fracture determination device according to (1), wherein
a target forming limit value generation unit generates a target forming limit value by using a forming limit value prediction expression, which is a function of the element size and tensile strength of the steel material,
the forming limit value prediction expression is, in a case where $\rho$ is a strain ratio, M is an element size indicating a size of an element in an analysis model used in an analysis by the FEM, $\varepsilon_1$ is maximum principal strain in an element size M, and $\varepsilon_2$ is minimum principal strain in the element size M, represented by a first coefficient k1 and a second coefficient k2 as

[Mathematical expression 1]

$$\varepsilon_1 = k1 \cdot M^{-k2}$$

$$\varepsilon_2 = \rho\, \varepsilon_1$$

where the first coefficient k1 is represented by tensile strength TS of material of the steel sheet and coefficients $\gamma$ and $\delta$ as

[Mathematical expression 2]

$$k1 = \gamma\, TS + \delta$$

and
the second coefficient k2 is represented by maximum principal strain $\varepsilon_{1B}$ in the reference element size and a coefficient $\eta$ as

[Mathematical expression 3]

$$k2 = -\ln(\varepsilon_{1B}/(\gamma TS + \delta))/\eta = -\ln(\varepsilon_{1B}/k1)/\eta$$

(8) A fracture determination method including:

extracting an element included in the heat affected zone formed around a spot weld portion of a steel material;
generating a reference forming limit value in accordance with material property and the sheet thickness of the heat affected zone on the basis of reference forming limit value information indicating the reference forming limit value used as a forming limit value in a reference element size which is an element size used as a reference;
using the element size and tensile strength of the steel material to change the reference forming limit value, predict a forming limit value in an element size of an element included in the heat affected zone, and generate a forming limit value in the heat affected zone;
running a deformation analysis by using input information for the deformation analysis of the steel material by a finite element method including material property and sheet thickness of the steel material and outputting deformation information including strain of each element included in the heat affected zone;
determining maximum principal strain and minimum principal strain of each element included in the heat affected unit; and
determining whether each element in the analysis model will fracture on the basis of maximum principal strain and minimum principal strain of each element for which the principal strain is determined and a heat affected zone forming limit line specified by the heat affected forming limit value.

(9) A fracture determination program for causing a computer to perform processing to:

extract an element included in the heat affected zone formed around a spot weld portion of a steel material;
generate a reference forming limit value in accordance with material property and the sheet thickness of the heat affected zone on the basis of reference forming limit value information indicating the reference forming limit value used as a forming limit value in a reference element size which is an element size used as a reference;
use the element size and tensile strength of the steel material to change the reference forming limit value, predict a forming limit value in an element size of an element included in the heat affected zone, and generate a forming limit value in the heat affected zone;
run a deformation analysis by using input information for the deformation analysis of the steel material by a finite element method including material property and sheet thickness of the steel material and output deformation information including strain of each element included in the heat affected zone;
determine maximum principal strain and minimum principal strain of each element included in the heat affected unit; and
determine whether each element in the analysis model will fracture on the basis of maximum principal strain and minimum principal strain of each element for which the principal strain is determined and a heat affected zone forming limit line specified by the heat affected forming limit value.

[ADVANTAGEOUS EFFECTS OF INVENTION]

In one embodiment, fracture of a heat affected zone may be appropriately predicted irrespective of an element size in a deforming analysis by the FEM of a member including many heat affected zones.

BRIEF DESCRIPTION OF DRAWINGS

FIG. 1 is a diagram showing a relationship between forming limit lines generated by using a forming limit value prediction expression and actually measured values.
FIG. 2 is a diagram showing a fracture determination device according to a first embodiment.
FIG. 3 is a flowchart of fracture determination processing by the fracture determination device according to the first embodiment.

FIG. 4 is a flowchart showing more detailed processing of processing at S103 shown in FIG. 3.

FIG. 5A to FIG. 5D are diagrams for explaining processing shown in FIG. 4, and FIG. 5A and FIG. 5B are diagrams for explaining processing at S201, FIG. 5C is a diagram for explaining processing at S202, and FIG. 5D is a diagram for explaining processing at S203.

FIG. 6 is a flowchart showing more detailed processing of processing at S104 shown in FIG. 3.

FIG. 7 is a flowchart showing more detailed processing of processing at S105 shown in FIG. 3.

FIG. 8 is a diagram showing a fracture determination device according to a second embodiment.

FIG. 9 is a flowchart of fracture determination processing by the fracture determination device according to the second embodiment.

FIG. 10A to FIG. 10C are diagrams for explaining the processing at S103 when element sizes are different, and FIG. 10A is a diagram for explaining the processing at S201, FIG. 10B is a diagram for explaining the processing at S202, and FIG. 10C is a diagram for explaining the processing at S203.

FIG. 11 is a diagram showing a mold manufacturing system, which is an example of an application example of the fracture determination device according to an embodiment.

FIG. 12A and FIG. 12B are diagrams showing a hat member three-point bending test device used for measurement, and FIG. 12A is a side diagram and FIG. 2B is a sectional diagram along an A-A' line in FIG. 12A.

FIG. 13 is a diagram showing FEM analysis conditions in the vicinity of a spot weld in embodiment examples and comparative examples.

FIG. 14A to FIG. 14D are diagrams showing a comparison between experiment results by a real hat member and embodiment examples 1 and 2, and FIG. 14A is a diagram showing a fracture state of the real hat member, FIG. 14B is a diagram showing a fracture state of the embodiment example 1, FIG. 14C is a diagram showing a fracture state of the embodiment example 2, and FIG. 14D is a diagram showing a relationship between a pressing distance of a pressing member and a load produced at the hat member.

FIG. 15A to FIG. 15D are diagrams showing a comparison between experiment results by a real hat member and comparative examples 1 and 2, and FIG. 15A is a diagram showing a fracture state of a real hat member, FIG. 15B is a diagram showing a fracture state of the comparative example 1, FIG. 15C is a diagram showing a fracture state of the comparative example 2, and FIG. 15D is a diagram showing a relationship between a pressing distance of a pressing member and a load produced at the hat member.

DESCRIPTION OF EMBODIMENTS

In the following, with reference to the drawings, a fracture determination device, a fracture determination program, and a method thereof are explained. However, the technical scope of the present invention is not limited to those embodiments.

(Outline of fracture determination device according to embodiment)

The fracture determination device according to an embodiment changes reference forming limit value information in a reference element size created by actual measurement or the like and a reference forming limit value determined by material property and sheet thickness of a HAZ (heat affected zone) portion by a forming limit value prediction expression, which is a function of an element size, which is the size of an element in an analysis model, and tensile strength of a steel material. The fracture determination device according to the embodiment may use a target forming limit value in accordance with the tensile strength by using a forming limit value in the heat affected zone changed by the forming limit value prediction expression, which is a function of the element size, which is the size of an element in the analysis model, and the tensile strength of a steel material. The fracture determination device according to the embodiment may use a target forming limit value in accordance with the tensile strength, and therefore fracture of many heat affected zones included in a member may be predicted in a short time. In the following, before the fracture determination device according to the embodiment is explained, the principle of fracture determination processing in the fracture determination device according to the embodiment is explained.

The inventors of the present invention have found a forming limit value prediction expression to predict a reference forming limit value in the reference element size corresponding to the forming limit line created by actual measurement or the like, and maximum principal strain in the element size on the basis of a relationship between the element size in the analysis model of a determination-target steel sheet and the maximum principal strain in the reference element size. In other words, the inventors of the present invention have found that the presence/absence of fracture is determined by using a target forming limit value generated by changing the reference forming limit value corresponding to the reference forming limit line, which is used as a reference, by the forming limit value prediction expression, which is a function of the tensile strength of a steel material and the element size. By changing the forming limit value by using the forming limit value prediction expression in accordance with the element size, fracture in accordance with the element size may bed determined.

Expression (1) shown below is the forming limit value prediction expression found by the inventors of the present invention.

[Mathematical expression 4]

$$\varepsilon_1 = k1 \cdot M^{-k2}$$

$$\varepsilon_2 = \rho \, \varepsilon_1 \qquad (1)$$

Here, $\rho$ is the strain ratio, M is the element size [mm] indicating the size of the target element in the analysis using the finite element method, $\varepsilon_1$ is the maximum principal strain in the element size M, and $\varepsilon_2$ is the minimum principal strain in the element size M. Then, k1, which is the multiplicand of the element size M, is the first coefficient and k2, which is the exponent of the element size M, is the second coefficient depending on the maximum principal strain in the reference element size, to be explained with reference to expression (2) and expression (4) shown below. Expression (1) is an expression which predicts the maximum principal strain $\varepsilon_1$ in the element size M on the basis of the relationship between the element size M and the maximum principal strain in the reference element size. In expression (1), it is indicated that the maximum principal strain $\varepsilon_1$ in the element size M is generated by multiplying the first coefficient k1 as the multiplicand and the arithmetic operation result obtained by the power arithmetic operation in which the second coefficient k2 is taken as the exponent and the element size M is taken as the base.

Expression (2) shown below is an expression showing expression (1) in more detail.

[Mathematical expression 5]

$$\varepsilon_1 = (\gamma TS + \delta) \cdot M^{(\ln(\varepsilon_{1B}/(\gamma TS + \delta))/\eta)}$$

$$\varepsilon_2 = \rho \, \varepsilon_1 \qquad (2)$$

Here, TS indicates the tensile strength [MPa] of a material, such as a steel sheet, $\varepsilon_{1B}$ indicates the reference element size, and $\gamma$, $\delta$, and $\eta$ each indicate a coefficient. Here, $\gamma$ is a negative value and $\delta$ is a positive value. The coefficients $\gamma$ and $\delta$ change in accordance with the strain ratio $\rho$. The coefficient $\eta$ is determined by the reference element size. From expressions (1) and (2), the first coefficient k1 is represented as follows.

[Mathematical expression 6]

$$k1 = \gamma TS + \delta \qquad (3)$$

In expression (3), the first coefficient k1 is in proportion to the tensile strength TS when the strain ratio $\rho$ is constant, in other words, it is indicated that the first coefficient k1 is a function of the strain ratio $\rho$ and the tensile strength of a steel material. Expression (3) represents that the first coefficient k1 is in proportion to the tensile strength TS of a steel material and represents that as the tensile strength TS of a steel material increases, the maximum principal strain $\varepsilon_1$ and the minimum principal strain $\varepsilon_2$ increase. The first coefficient k1 is a positive value, $\gamma$ is a negative value, and $\delta$ is a positive value, and therefore as the tensile strength TS of a steel material increases the first coefficient k1 decreases. Further, from expressions (1) and (2), the second coefficient k2 is represented as follows.

[Mathematical expression 7]

$$k2 = -\ln(\varepsilon_{1B}/(\gamma TS + \delta))/\eta = -\ln(\varepsilon_{1B}/k1)/\eta \qquad (4)$$

In expression (4), it is indicated that the second coefficient k2 is a function of the maximum principal strain $\varepsilon_{1B}$ in the reference element size and the first coefficient k1. In more detail, in expression (4), it is indicated that the second coefficient k2 is in proportion to the logarithm of the maximum principal strain in the reference element size and at the same time that the second coefficient k2 is in proportion to the logarithm of the inverse of the first coefficient k1.

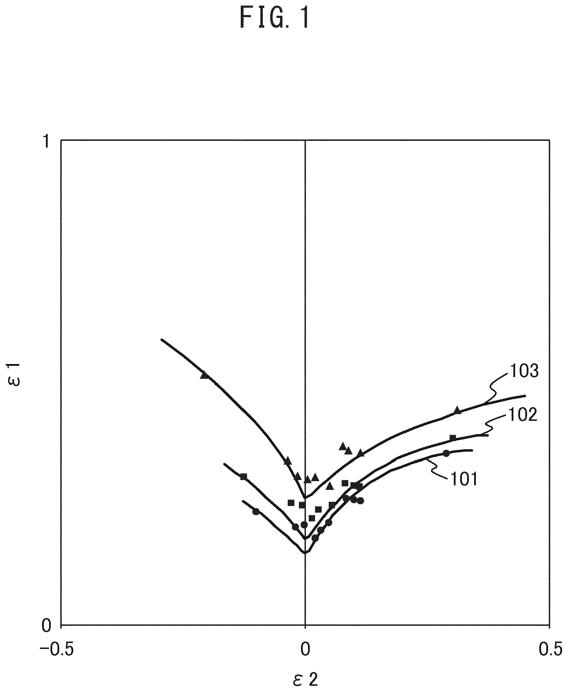

FIG. 1 is a diagram showing a relationship between forming limit lines generated by using target forming limit values changed by the forming limit value prediction expression explained with reference to expressions (1) to (4) and actually measured values. In FIG. 1, the horizontal axis represents the minimum principal strain $\varepsilon_2$ and the vertical axis represents the maximum principal strain $\varepsilon_1$. A circle mark indicates an actually measured value when the gauge length is 10 [mm], a rectangle mark indicates an actually measured value when the gauge length is 6 [mm], and a triangle mark indicates an actually measured value when the gauge length is 2 [mm]. A curve 101 is a reference forming limit line created by using reference forming limit value information generated from actually measured data when the gauge length is 10 [mm] and a reference forming limit value calculated from material property and sheet thickness. Curves 102 and 103 indicate target reference forming limit lines generated by using target forming limit values changed form the reference forming limit values indicated by the curve 101 by the forming limit value prediction expression explained with reference to expressions (1) to (4). The curve 102 indicates the forming limit line when the gauge length is 6 [mm] and the curve 103 indicates the forming limit line when the gauge length is 2 [mm]. The tensile strength as the material property of the steel sheet, which was used for actual measurement and generation of the forming limit lines shown in FIG. 1, is 1,180 [MPa] and the sheet thickness is 1.6 [mm]. In general, in the vicinity of the fracture portion, the strain is localized, and therefore higher strain occurs at a portion nearer to the fracture portion. Thus, the shorter the length of the gauge which reads the strain at the fracture portion, the higher strain which occurs in the vicinity of the fracture portion is read, and therefore the value of the forming limit value becomes high. In other words, in FIG. 1, the forming limit line is located at a higher portion. Further, when this is compared with a steel material of other material property, in general, the ductility of the steel material decreases as the tensile strength TS of the steel material increases, and therefore the value of the strain in the vicinity of the fracture portion becomes small. Thus, the forming limit curve in FIG. 1 is located at a lower portion.

As shown in FIG. 1, the target forming limit line changed from the reference forming limit line by using the reference forming limit value well coincides with the actually measured values with a high accuracy when the gauge length is 2 [mm] and the gauge length is 6 [mm], and therefore it is indicated that the forming limit value prediction expression according to the present invention has a high accuracy.

The fracture determination device according to the embodiment determines whether fracture will occur on the basis of the forming limit line in accordance with the element size of the element included in the HAZ portion, and therefore fracture determination is enabled in accordance with the element size. Further, the fracture determination device according to the embodiment may determine fracture in accordance with the element size even if the element size of the element included in the HAZ portion is made to differ from the element size of another element in order to improve the analysis accuracy of the HAZ portion.


(Configuration and function of fracture determination device according to first embodiment)

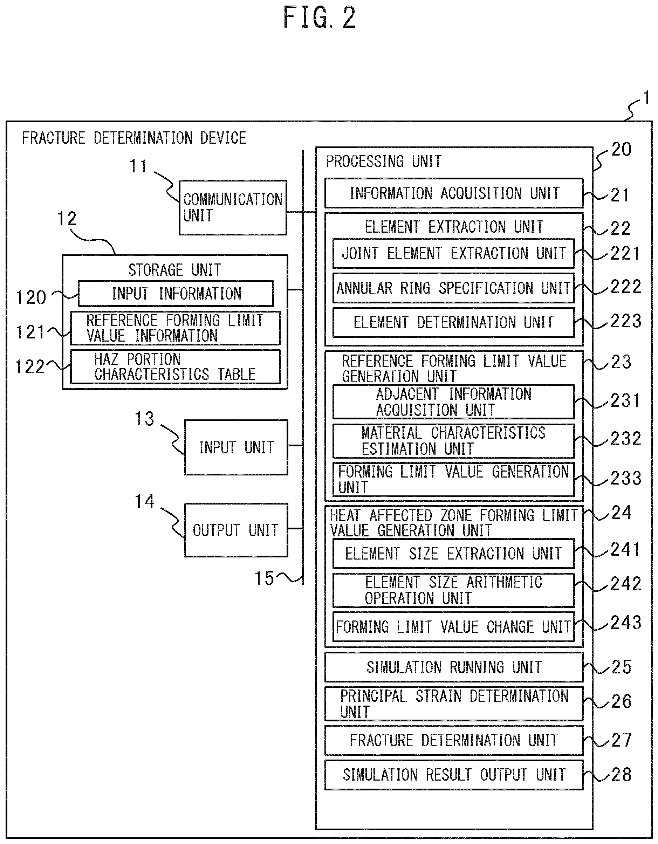

FIG. 2 is a diagram showing a fracture determination device according to a first embodiment.

A fracture determination device 1 has a communication unit 11, a storage unit 12, an input unit 13, an output unit 14, and a processing unit 20. The communication unit 11, the storage unit 12, the input unit 13, the output unit 14, and the processing unit 20 are connected with one another via a bus 15. The fracture determination device 1 runs a collision deformation analysis of a vehicle, such as an automobile, by the FEM as well as generating a target forming limit value indicating a forming limit value in an element size by changing a reference forming limit value by the forming limit value prediction expression using tensile strength of a steel material. The fracture determination device 1 determines whether each element will fracture from the maximum principal strain and the minimum principal strain of each element output by the collision deformation analysis on the basis of the generated target forming limit value. In one example, the fracture determination device 1 is a personal computer capable of running an analysis by the FEM.

The communication unit 11 has a wired communication interface circuit, such as Ethernet (registered trademark). The communication unit 11 performs communication with a server and the like, not shown schematically, via a LAN.

The storage unit 12 includes at least one of, for example, a semiconductor storage device, a magnetic tape device, a magnetic disc device, and an optical disc drive. The storage unit 12 stores an operating system program, driver programs, application programs, data, and so on, which are used for processing in the processing unit 20. For example, the storage unit 12 stores, as an application program, a fracture determination processing program for performing fracture determination processing to determine fracture of each element, such as an element included in the HAZ portion. Further, the storage unit 12 stores, as an application program, a collision deformation analysis program for running a collision deformation analysis using the FEM. The fracture determination processing program, the collision deformation analysis program, and so on may be installed in the storage unit 12 by using a publicly known setup program or the like from a computer readable portable storage medium, for example, such as a CD-ROM and a DVD-ROM.

Further, the storage unit 12 stores various kinds of data used for the fracture determination processing and the collision deformation analysis. For example, the storage unit 12 stores input information 120, reference forming limit value information 121, and so on used for the fracture determination processing and the collision deformation analysis.

The input information 120 includes material property and sheet thickness of a steel material and the element size indicating the size of an element in the collision deformation analysis by the finite element method. The material property of a steel material include a stress-strain (S-S) curve, each coefficient in the Swift formula used for fitting of the S-S curve, Young's modulus, Poisson's ratio, density, and so on. The reference forming limit value information 121 is used when specifying the reference forming limit value indicating the forming limit value corresponding to the forming limit line in the reference element size indicating the element size, which is used as a reference, for each of material property and sheet thickness. In one example, the reference forming limit value information 121 includes the forming limit value corresponding to the reference forming limit line actually measured for each of material property and sheet thickness. Further, in another example, the reference forming limit value information 121 includes the forming limit value corresponding to the reference forming limit line corrected so that the forming limit line obtained from the Storen-Rice theoretical formula coincides with the actually measured reference forming limit line.

Further, the storage unit 12 stores the input data of the collision deformation analysis by the FEM.

Furthermore, the storage unit 12 stores a HAZ portion characteristics table 122 indicating a correlation of the material property of the HAZ portion formed by the spot weld. In one example, a minute tensile test of the HAZ portion in various steel materials is performed and a relationship between the material grade of the steel material of the mother material and the material property of the HAZ portion is found, and then the relationship is stored in the HAZ portion characteristics table 122. The material property of the HAZ portion are stored by the stress-strain curve or the Swift coefficient or the like obtained by performing fitting for the stress-strain curve by the Swift formula. By the HAZ portion characteristics table 122 storing the relationship between the material grade of the steel material of the mother material and the material property of the HAZ portion, the material property of the HAZ portion in accordance with the material grade of the steel material of the mother material are defined correctly. Further, the storage unit 12 may temporarily store temporary data relating to predetermined processing.

The input unit 13 may be any device to input data and is, for example, a touch panel, a keyboard, and so on. An operator may input a character, a figure, a symbol, and so on by using the input unit 13. When operated by an operator, the input unit 13 generates a signal corresponding to the operation. Then, the generated signal is supplied to the processing unit 20 as instructions of the operator.

The output device 14 may be any device to display a video, an image, and so on and is, for example, a liquid crystal display, an organic EL (Electro-Luminescence) display, and so on. The output unit 14 displays a video in accordance with video data, an image in accordance with image data, and so on, supplied from the processing unit 20. Further, the output unit 14 may be an output device which prints a video, an image, a character, or the like on a display medium, such as paper.

The processing unit 20 has one or a plurality of processors and peripheral circuits thereof. The processing unit 20 centralizedly controls the entire operation of the fracture determination device 1 and for example, is a CPU. The processing unit 20 performs processing on the basis of the programs (driver program, operating system program, application program, and so on) stored in the storage unit 12. Further, the processing unit 20 may execute a plurality of programs (application programs and the like) in parallel.

The processing unit 20 has an information acquisition unit 21, an element extraction unit 22, a reference forming limit value generation unit 23, a heat affected zone forming limit value generation unit 24, an analysis running unit 25, a principal strain determination unit 26, a fracture determination unit 27, and an analysis result output unit 28. The element extraction unit 22 has a joint element extraction unit 221, an annular ring specification unit 222, and an element determination unit 223. The reference forming limit value generation unit 23 has an adjacent information acquisition unit 231, a material property estimation unit 232, and a forming limit value generation unit 233. The heat affected zone forming limit value generation unit 24 has an element size extraction unit 241, an element size arithmetic operation unit 242, and a forming limit value change unit 243. Each of these units is a function module implemented by a program executed by the processor included in the processing unit 20. Alternatively, each of these units may be implemented in the fracture determination device 1 as firmware.

(Fracture determination processing by fracture determination device according to first embodiment)

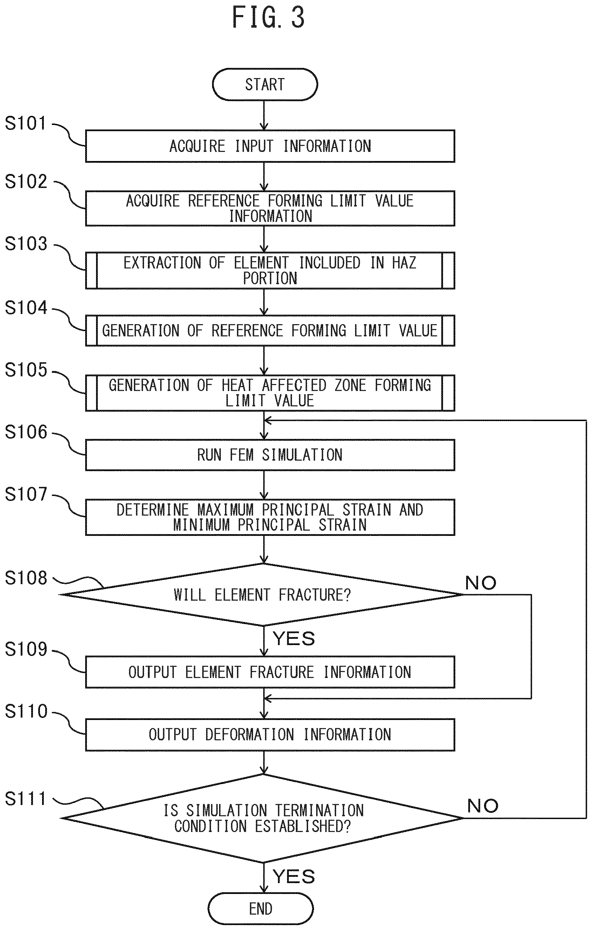

FIG. 3 is a flowchart of fracture determination processing for the fracture determination device 1 to determine whether each element of the HAZ portion for which the collision deformation analysis has been run will fracture. The fracture determination processing shown in FIG. 3 is performed mainly by the processing unit 20 in cooperation with each element of the fracture determination device 1 on the basis of the program stored in advance in the storage unit 12.

First, the information acquisition unit 21 acquires the reference forming limit value information 121 from the storage unit 12 (S102) as well as acquiring the input information including the material property, such as the tensile strength, the sheet thickness, and the element size from the storage unit 12 (S101).

Next, the element extraction unit 22 extracts elements included in the HAZ portion formed around the spot weld portion of the steel material (S103).

Next, the reference forming limit value generation unit 23 generates a reference forming limit value corresponding to the material property and the sheet thickness of the HAZ portion on the basis of the reference forming limit value information 121 acquired by the processing at S102 (S104).

Next, the heat affected zone forming limit value generation unit 24 generates a forming limit value in the heat affected zone indicating the forming limit value in the element size of the HAZ portion by changing the reference forming limit value generated by the processing at S104 by the forming limit value prediction expression represented in expressions (1) to (4) (S105).

Next, the analysis running unit 25 runs the collision deformation analysis of a vehicle, such as an automobile, formed by the steel material by the FEM by using mesh data stored in the storage unit 12 on the basis of the input information acquired by the processing at S101 (S106). The analysis running unit 25 sequentially outputs deformation information including the displacement of a contact point, the strain of the element, and the stress of the element for each element as results of running the analysis.

Next, the principal strain determination unit 26 determines the maximum principal strain $\varepsilon_1$ and the minimum principal strain $\varepsilon_2$ of each element of the HAZ portion (S107). In one example, the principal strain determination unit 26 determines the maximum principal strain $\varepsilon_1$ and the minimum principal strain $\varepsilon_2$ of each element from the strain component of each element included in the deformation information output by the processing at S106.

Next, the fracture determination unit 27 determines whether each element of the HAZ portion will fracture on the basis of the maximum principal strain $\varepsilon_1$ and the minimum principal strain $\varepsilon_2$ of each element determined by the processing at S107 and the heat affected zone forming limit line specified by the target forming limit value generated by the processing at S104 (S108). The fracture determination unit 27 determines that the element will not fracture when the maximum principal strain $\varepsilon_1$ and the minimum principal strain $\varepsilon_2$ do not exceed a threshold value given by the heat affected zone forming limit line and determines that the element will fracture when the maximum principal strain $\varepsilon_1$ and the minimum principal strain $\varepsilon_2$ exceed the threshold value given by the heat affected zone forming limit line. In one example, the heat affected zone forming limit line is obtained by arithmetic operation as an approximation expression of the target forming limit value.

Next, in a case of determining that the element of the HAZ portion will fracture (S108 - YES), the fracture determination unit 27 outputs element fracture information indicating that the element will fracture to the analysis running unit 25 (S109). The analysis running unit 25 may erase the element determined to fracture, in other words, delete the element from the collision deformation analysis data.

The processing corresponding to the processing of the reference forming limit value generation unit 23, the heat affected zone forming limit value generation unit 24, the principal strain determination unit 26, and the fracture determination unit 27 is also performed for the element of the steel sheet other than the HAZ portion. In other words, the reference forming limit value generation unit 23 generates a reference forming limit value in accordance with the material property and the sheet thickness of the element other than that of the HAZ portion on the basis of the reference forming limit value information 121. Further, the target forming limit value generation unit, not shown schematically, generates a target forming limit value indicating the forming limit value in the element size of the element other than that of the HAZ portion by changing the reference forming limit value by the forming limit value prediction expression. Furthermore, the principal strain determination unit 26 determines the maximum principal strain $\varepsilon_1$ and the minimum principal strain $\varepsilon_2$ of each element other than that of the HAZ portion. Then, the fracture determination unit 27 determines whether each element other than that of the HAZ portion will fracture on the basis of the maximum principal strain $\varepsilon_1$ and the minimum principal strain $\varepsilon_2$ of each element other than that of the HAZ portion and the target forming limit value generated by the processing at S103.

The analysis result output unit 28 outputs the deformation information sequentially output by the analysis running unit 25 (S110). Next, the analysis running unit 25 determines whether a predetermined analysis termination condition is established (Sill). The analysis termination time is acquired from the input data. Until it is determined that the analysis termination condition is established, the processing is repeated.

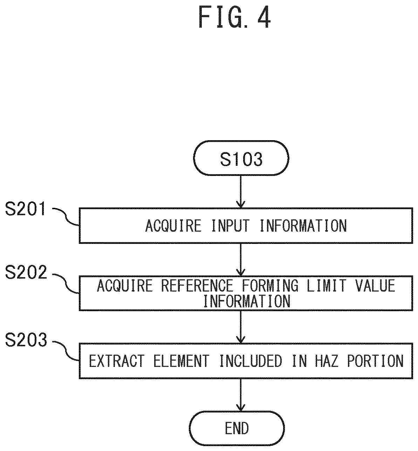

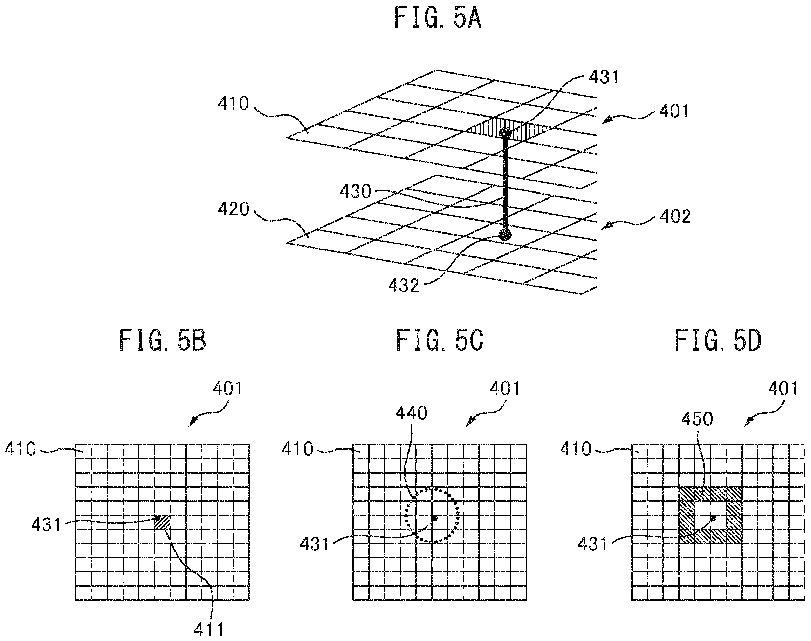

FIG. 4 is a flowchart showing more detailed processing of the processing at S103. FIG. 5A to FIG. 5D are diagrams for explaining the processing shown in FIG. 4, and FIG. 5A and FIG. 5B are diagrams for explaining the processing at S201, FIG. 5C is a diagram for explaining the processing at S202, and FIG. 5D is a diagram for explaining the processing at S203.

First, the joint element extraction unit 221 extracts a joint element that specifies that two steel materials be joined (S201).

As shown in FIG. 5A and FIG. 5B, a first steel material 401 formed by a plurality of first shell elements 410 and a second steel material 402 formed by a plurality of second shell elements 420 are joined via a bar element 430. The bar element 430 is also referred to as a beam element and is a joint element that joins the first steel material 401 and the second steel material 402. The bar element 430 is joined with the first steel material 401 at a first end point 431 and joined with the second steel material 402 at a second end point 432.

Next, as shown in FIG. 5C, the annular ring specification unit 222 specifies an annular ring 440 with the first end point 431 as being a center point, which is the contact point between one end of the bar element 430 and the first shell element 410 of the first steel material 401 (S202). The inner diameter of the annular ring 440 corresponds to a nugget diameter of a nugget, which is a weld portion by the spot weld, indicated in the input information. Thus, it is preferable to set the inner diameter of the annular ring 440 to a value about between the nugget diameter and the nugget diameter + 0.1 to 2.0 [mm], and by this, it may be defined that the area intersecting with the annular ring 440 is the HAZ portion generated by the spot weld. In one example, the width of the HAZ portion is about between 0.1 [mm] and 2 [mm].

Then, as shown in FIG. 5D with slashes attached, the element determination unit 223 determines the first shell element 410 at least part of which is included in the annular ring 440 to be a shell element 450 which forms the HAZ portion (S203).

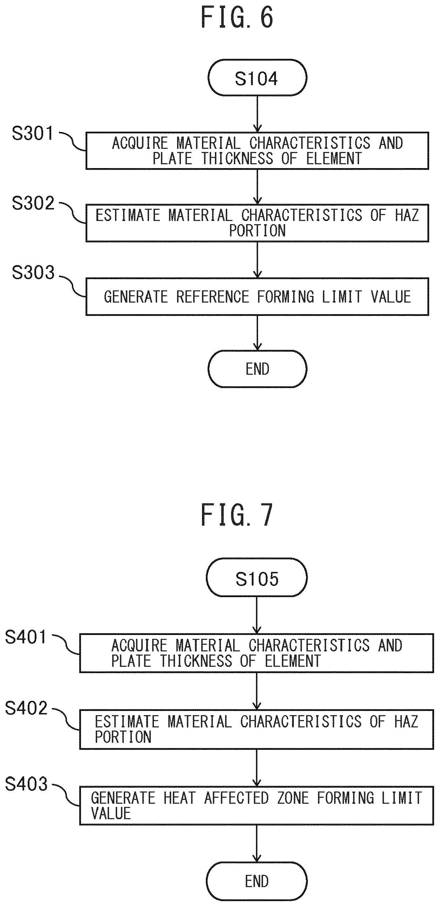

FIG. 6 is a flowchart showing more detailed processing of the processing at S104.

First, the adjacent information acquisition unit 231 acquires the material property and sheet thickness of a first shell element 411 adjacent to the first end point 431, which is the contact point of the one end of the bar element 430, the joint element, and the first shell element 410 forming the first steel material 401 (S301).

The adjacent information acquisition unit 231 determines the first shell element 411 to which slashes are attached in FIG. 5B to be the first shell element 411 adjacent to the first end point 431 and acquires the material property and sheet thickness of the adjacent first shell element 411 from the input information stored in the storage unit 12. In one example, the adjacent information acquisition unit 231 theoretically calculates the tensile strength TS of the first steel material 401 on the basis of the stress-strain curve included in the input information 120 or the Swift coefficient represented by the Swift formula and acquires the material grade of the adjacent first shell element 410.

Next, the material property estimation unit 232 refers to the HAZ portion characteristics table 122 stored in the storage unit 12 and estimates the material property of the shell element 450 forming the HAZ portion from the material property acquired by the adjacent information acquisition unit 231 (S302).

Then, the forming limit value generation unit 233 generates a reference forming limit value corresponding to the material property estimated by the material property estimation unit 232 and the sheet thickness acquired by the adjacent information acquisition unit 231 (S303). Specifically, for example, the reference forming limit value generation unit 23 generates a reference forming limit value corresponding to the material property and sheet thickness by selecting one group of reference forming limit values from a plurality of groups of reference forming limit values stored in the storage unit 12 on the basis of a combination of the material property and sheet thickness included in the input information 120. In this case, the reference forming limit value of the plurality of groups included in the reference forming limit value information 121 is an actually measured value. Further, for example, the reference forming limit value generation unit 23 generates a reference forming limit value corresponding to the material property and sheet thickness by correcting the one group of reference forming limit values stored in the storage unit 12 by actually measured values in accordance with the material property and sheet thickness. In this case, the forming limit value generation unit 233 first generates a forming limit value corresponding to the forming limit line from the Storen-Rice theoretical formula. Next, the forming limit value generation unit 233 generates a reference forming limit value corresponding to the material property and sheet thickness by shifting the forming limit value generated from the Storen-Rice theoretical formula in accordance with the actually measured value on the basis of the actually measured value stored in the storage unit 12 as the shift amount in accordance with the material property and sheet thickness.

FIG. 7 is a flowchart showing more detailed processing of the processing at S105.

First, the element size extraction unit 241 extracts the element size of each shell element 450 included in the HAZ portion from the mesh data stored in the storage unit 12 (S401).

Next, the element size arithmetic operation unit 242 performs the arithmetic operation to obtain the element size of the shell element 450 included in the HAZ portion from each element size extracted by the element size extraction unit 241 (S402). In one example, the element size arithmetic operation unit 242 performs the arithmetic operation by taking the average value of the element size extracted by the element size extraction unit 241 as the element size of the shell element 450 included in the HAZ portion.

The element size extraction unit 241 and the element size arithmetic operation unit 242 function as an element size determination unit which determines the element size of the shell element 450 included in the HAZ portion.

Then, the forming limit value change unit 243 changes the reference forming limit value in accordance with the element size obtained by the arithmetic operation by the element size arithmetic operation unit 242 by the forming limit value prediction expression and generates a forming limit value in the heat affected zone (S403).

(Working and effect of fracture determination device according to first embodiment)

The fracture determination device 1 determines whether the HAZ portion will fracture by using the forming limit value in the heat affected zone changed in accordance with the element size by the forming limit value prediction expression, and therefore fracture prediction of the HAZ portion may be accurately performed without depending on the element size.

Accurate fracture prediction of the HAZ portion may be performed by the fracture determination device 1, and therefore the number of times of the collision test with an actual automobile member may be significantly reduced. Further, the collision test with an actual automobile member may be omitted.

Further, by performing accurate fracture prediction of the HAZ portion by the fracture determination device 1, a member that prevents fracture at the time of collision may be designed on a computer, and therefore this contributes to a significant reduction in the cost and a reduction in development period of time.

(Configuration and function of fracture determination device according to second embodiment)

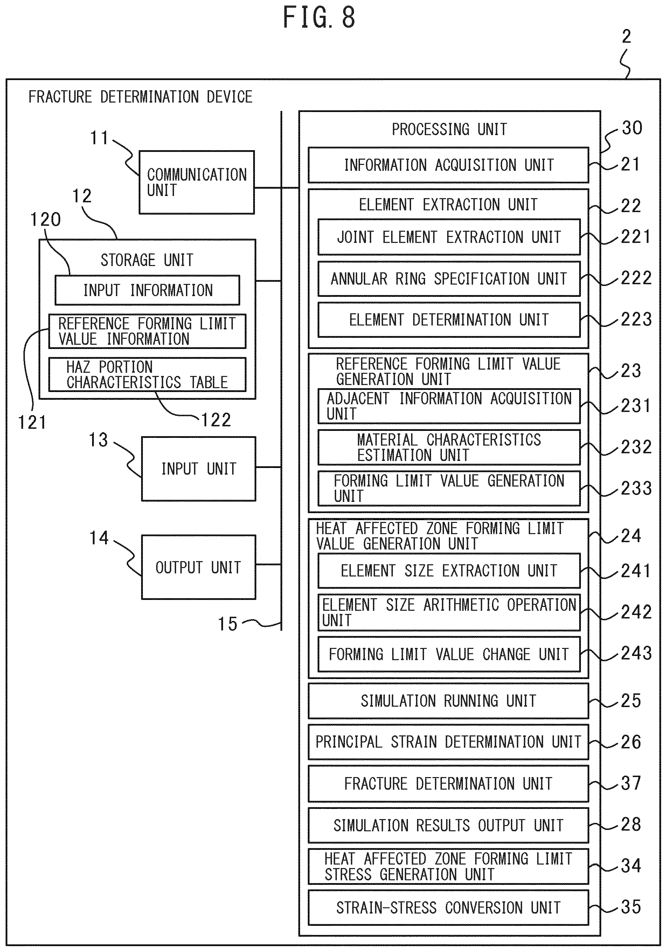

FIG. 8 is a diagram showing a fracture determination device according to a second embodiment.

A fracture determination device 2 differs from the fracture determination device 1 according to the first embodiment in that a processing unit 30 is arranged in place of the processing 20. The processing unit 30 differs from the processing unit 20 in having a heat affected zone forming limit stress generation unit 34 and a strain-stress conversion unit 35 and in that a fracture determination unit 37 is arranged in place of the fracture determination unit 27. The configuration and function of the components of the fracture determination device 2 except for the heat affected zone forming limit stress generation unit 34, the strain-stress conversion unit 35, and the fracture determination unit 37 are the same as the configuration and function of the components of the fracture determination device 1, to which the same symbols are attached, and therefore detailed explanation is omitted here.

(Fracture determination processing by fracture determination device according to second embodiment)

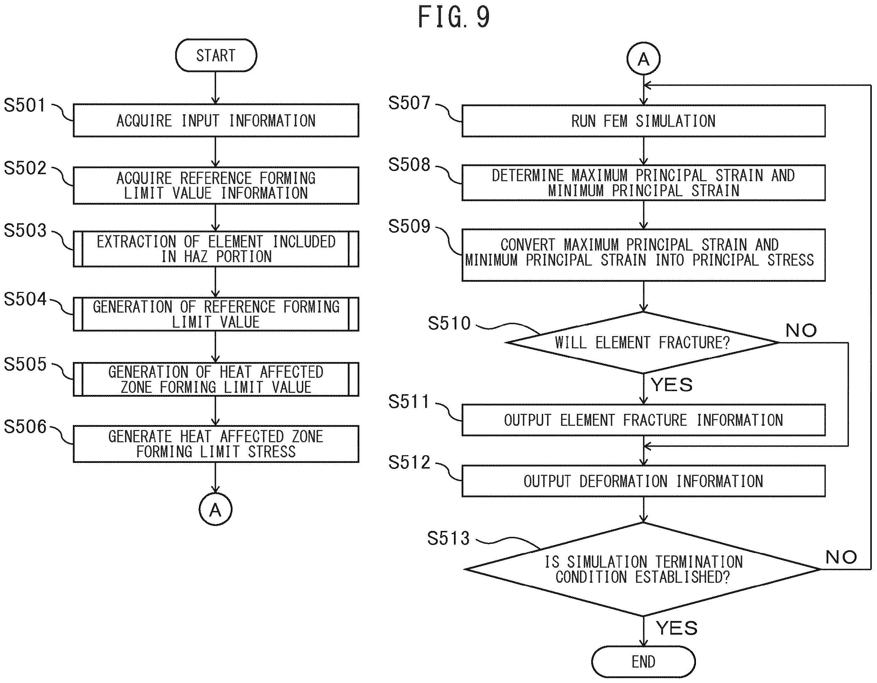

FIG. 9 is a flowchart of fracture determination processing for the fracture determination device 2 to determine whether each element of the HAZ portion for which the collision deformation analysis has been run will fracture. The fracture determination processing shown in FIG. 9 is performed mainly by the processing unit 30 in cooperation with each element of the fracture determination device 2 on the basis of the program stored in advance in the storage unit 12.

Processing at S501 to S505 is the same as the processing at S101 to S105, and therefore detailed explanation is omitted here. The heat affected zone forming limit stress generation unit 34 generates heat affected zone forming limit stress by changing the reference forming limit value generated by the processing at S505 (S506).

Next, by using the finite element method, the analysis running unit 25 runs the collision deformation analysis when a predetermines collision occurs by the FEM by using the mesh data stored in the storage unit 12 (S507). Next, the principal strain determination unit 26 determines the maximum principal strain $\varepsilon_1$ and the minimum principal strain $\varepsilon_2$ of each element of the HAZ portion (S508).

Next, the strain-stress conversion unit 35 converts the determined maximum principal strain $\varepsilon_1$ and minimum principal strain $\varepsilon_2$ of each element of the HAZ portion output by the processing at S508 into maximum principal stress and minimum principal stress (S509).

Next, the fracture determination unit 37 determines whether each element including the element of the HAZ portion will fracture on the basis of the maximum principal stress and the minimum principal stress of each element converted by the processing at S509 and the heat affected zone forming limit stress generated by the processing at S506 (S510). The fracture determination unit 37 determines that the element will not fracture when the maximum principal stress and the minimum principal stress do not exceed the heat affected zone forming limit stress and determines that the element will fracture when the maximum principal stress and the minimum principal stress exceed the heat affected zone forming limit stress. Processing at S511 to S513 is the same as the processing at S109 to S111, and therefore detailed explanation is omitted here.

(Modification example of fracture determination device according to embodiments)

The fracture determination devices 1 and 2 perform the fracture determination processing in the collision deformation analysis of a vehicle, but a fracture determination device according to the embodiment may perform the fracture determination processing in another analysis, such as a deformation analysis at the time of press molding of a steel sheet. Further, in the explained example, explanation is given by taking the case where the element size of the analysis model is uniform as an example, but the fracture determination device according to the embodiment may use an analysis model whose element sizes are different for different regions. In other words, the element model used by the fracture determination device according to the embodiment may be one including a plurality of element sizes.

In the fracture determination devices 1 and 2, the bar element is used as the joint element that joins the first steel material 401 and the second steel material 402, but in the fracture determination device according to the embodiment, another element, such as the shell element and a solid element, may be used as the joint element that joins a pair of steel materials.

Furthermore, in the fracture determination devices 1 and 2, each of the first shell element 410 and the second shell element 420 has the same element size, but in the fracture determination device according to the embodiment, the element size of the element may differ for each element.

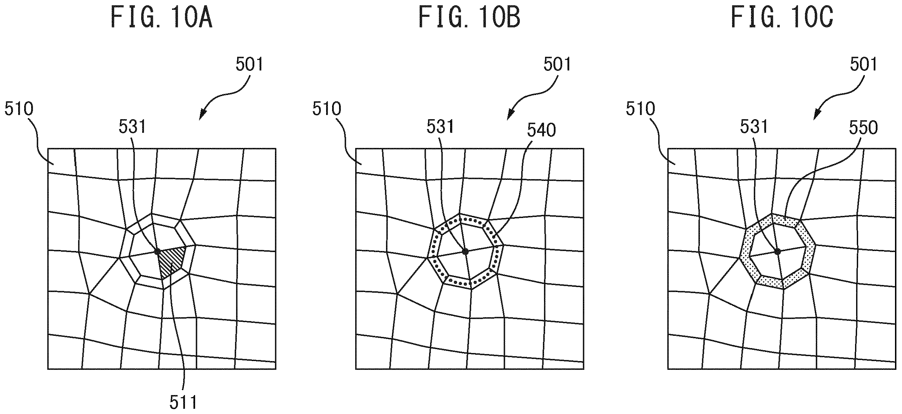

FIG. 10A to FIG. 10C are diagrams for explaining the processing at S103 when the element sizes are different. FIG. 10A is a diagram for explaining the processing at S201, FIG. 10B is a diagram for explaining the processing at step S202, and FIG. 10C is a diagram for explaining the processing at S203.

As shown in FIG. 10A, a first end 531 of a joint element extracted by the joint element extraction unit 221 by the processing at S201 is located at the center of an octagon formed by four shell elements 510. The four trapezoidal shell elements 510 located on the outside of the octagon formed by the four shell elements 510 are arranged by a designer, not shown schematically, so as to correspond to the HAZ portion.

As shown in FIG. 10B, by the processing at S202, an annular ring 540 is arranged so as to be included in the four trapezoidal shell elements 510 located on the outside of the octagon formed by the four shell elements 510 by the annular ring specification unit 222.

Then, as shown in FIG. 10C, by the processing at S202, a shell element 550 forming the HAZ portion is determined by the element determination unit 223.

(Application example of fracture determination device according to embodiment)

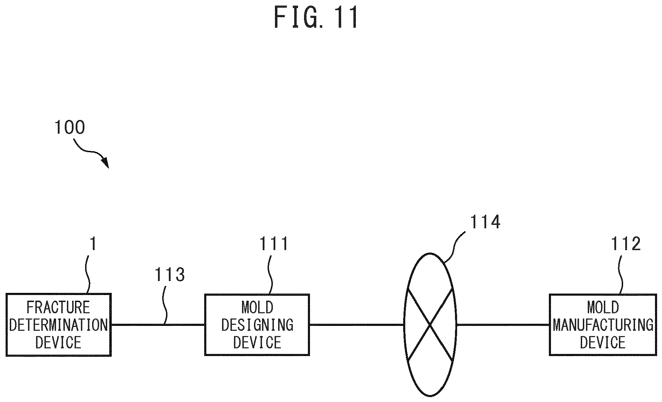

FIG. 11 is a diagram showing a mold manufacturing system, which is an example of the application example of the fracture determination device according to the embodiment.

A mold manufacturing system 100 has the fracture determination device 1, a mold designing device 111, and a mold manufacturing device 112. The mold designing device 111 is a device which designs a mold for manufacturing, for example, the body of an automobile and is a computer connected with the fracture determination device 1 via a LAN 113. The mold designing device 111 generates mold data representing a desired mold by using fracture determination by the fracture determination device 1. In FIG. 11, the mold designing device 111 is arranged as a device separate from the fracture determination device 1, but in another example, the mold designing device 111 may be integrated with the fracture determination device 1.

The mold manufacturing device 112 has mold manufacturing facilities, such as an electric discharge machine, a milling machine, and a polishing machine, not shown schematically, and is connected to the mold designing device 111 via a communication network 114, which is a wide-area communication network, by a switching machine, not shown schematically. The mold manufacturing device 112 manufactures a mold corresponding to the mold data on the basis of the mold data transmitted from the mold designing device 111.

EXAMPLES

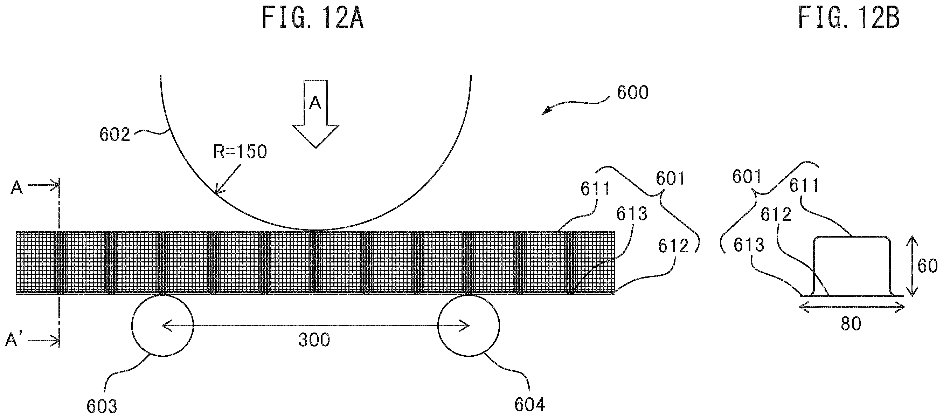

FIG. 12A and FIG. 12B are diagrams showing a hat member three-point bending test device used for measurement, and FIG. 12A is a side diagram and FIG. 12B is a sectional diagram along an A-A' line in FIG. 12A.

A hat member three-point bending test device 600 has a hat member 601, which is a test-target member, a pressing jig 602, a first supporting jig 603, and a second supporting jig 604. The hat member 601 includes a hat panel 611 having a flange portion press-molded into the shape of a hat and a closing sheet 612 joined via a spot weld portion 613 at the flange portion of the hat panel 611. The hat panel 611 is a hot stamp material whose material tensile strength is 1.5 [MPa] and whose sheet thickness is 1.6 [mm]. The closing sheet 611 has a material tensile strength of 440 [MPa] and a sheet thickness of 1.2 [mm]. The height of the hat member is 60 [mm] and the width is 80[mm]. By spot-welding the flange portion of the hat panel 611 and the closing sheet 612 at a pitch of 50 [mm] in the lengthwise direction, the spot weld portion 613 is arranged at a pitch of 50 [mm] in the lengthwise direction of the flange portion of the hat member 601.

The pressing jig 602 is a cylindrical member whose radius is 150 [mm] and presses the surface of the hat panel 611 in opposition to the closing sheet 612. The first supporting jig 603 and the second supporting jig 604 are arranged 300 [mm] separate from each other and support the hat member 601 at the backside of the closing sheet 612.

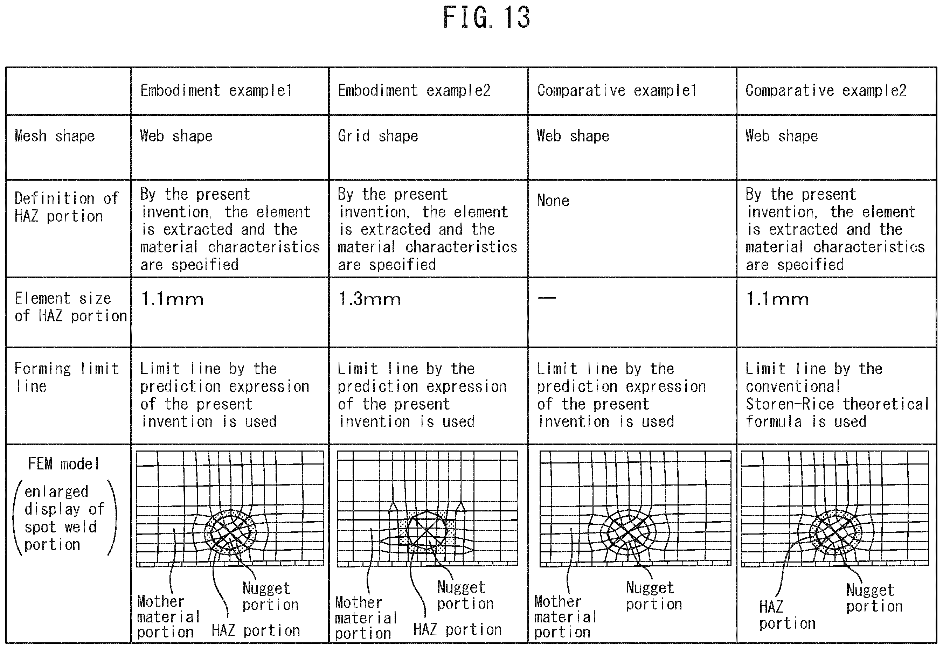

FIG. 13 is a diagram showing FEM analysis conditions in the vicinity of the spot weld in embodiment examples and comparative examples.

In an embodiment example 1, the mesh shape is the shape of a web and the definition of the HAZ portion specifies material property after the element corresponding to the HAZ portion is extracted by the present invention. The average element size of the HAZ portion is 1.1 [mm] and the forming limit line is by the prediction expression of the present invention.

In an embodiment example 2, the mesh shape is the shape of a grid and the definition of the HAZ portion specifies material property after the element corresponding to the HAZ portion is extracted by the present invention. The average element size of the HAZ portion is 1.3 [mm] and the forming limit line is by the prediction expression of the present invention.

In a comparative example 1, the mesh shape is the shape of a web and the HAZ portion is not defined and the forming limit line is by the prediction expression of the present invention.

In a comparative example 2, the mesh shape is the shape of a web and the definition of the HAZ portion specifies material property after the element corresponding to the HAZ portion is extracted by the present invention. The average element size of the HAZ portion is 1.1 [mm] and the forming limit line is by the conventional Storen-Rice theoretical formula.

In the embodiment examples 1 and 2 and the comparative examples 1 and 2, the Swift coefficients of the mother material portion of the hat member 601 are K = 2,000 [MPa], n = 0.05, and $\varepsilon_0$ == 0.0001. On the other hand, the Swift coefficients of the HAZ portion of the hat member 601 are K = 1,400 [MPa], n = 0.0, and $\varepsilon_0$ == 0.0002.

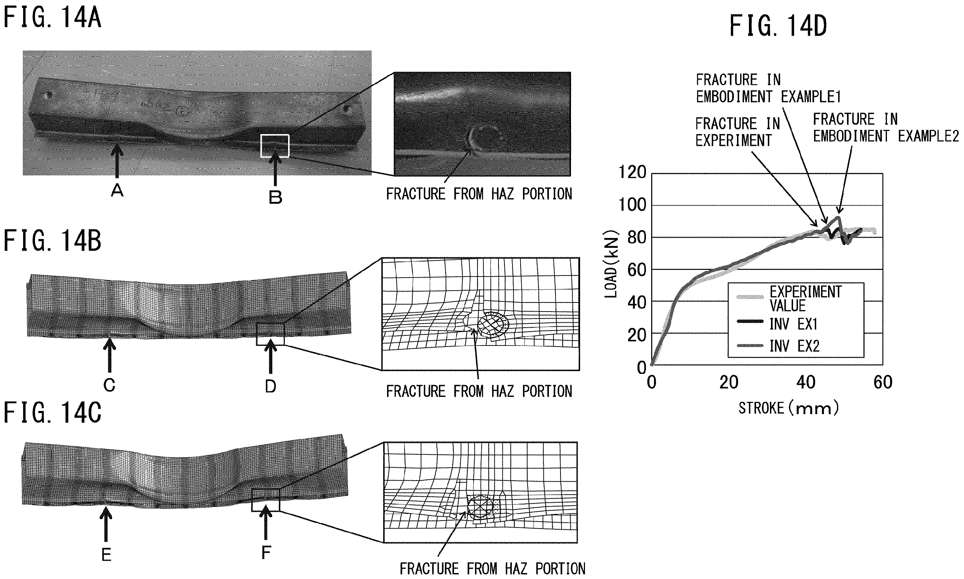

FIG. 14A to FIG. 14D are diagrams showing a comparison between experiment results by a real hat member and FEM analysis results of the embodiment examples 1 and 2. FIG. 14A is a diagram showing the real hat member after the experiment, FIG. 14B is a diagram showing the FEM analysis results of the embodiment example 1, FIG. 14C is a diagram showing the FEM analysis results of the embodiment example 2, and FIG. 14D is a diagram showing a relationship between the pressing distance and the pressing reaction force of the pressing jig 602. In FIG. 14D, the horizontal axis represents the pressing distance of the pressing member 602, in other words, a stroke [mm], and the vertical axis represents the reaction force that occurs in the pressing jig, in other words, a load [kN].

In FIG. 14A, as shown by arrows A and B, in the experiment results by the real hat member, fracture occurred at the two HAZ portions. Further, as shown by arrows C and D in FIG. 14B, in the embodiment example 1, fracture occurred at the two HAZ portions, the same as in the experiment results by the real hat member. Furthermore, as shown by arrows E and F in FIG. 14C, in the embodiment example 2, fracture occurred at the two HAZ portions, the same as in the experiment results by the real hat member. As shown in FIG. 14D, it is known that the load is slightly reduced immediately after the occurrence of the fracture in the experiment, and the timing at which fracture occurs in the embodiment examples 1 and 2 is approximately the same as the timing at which fracture occurs in the experiment by the real hat member and the phenomenon was also reproduced in which the load is slightly reduced immediately after the occurrence of the fracture.

In the embodiment examples 1 and 2, the positions of the fracture from the HAZ portion may be accurately predicted, which occurred in the experiment by the real hat member, and the fracture occurrence timing. Further, it was checked that the experiment results can be predicted with a high accuracy both in the embodiment example 1 in which the mesh around the spot weld was cut into the shape of a web, as the mesh cutting method, and in the embodiment example 2 in which the mesh was cut into the shape of a grid.

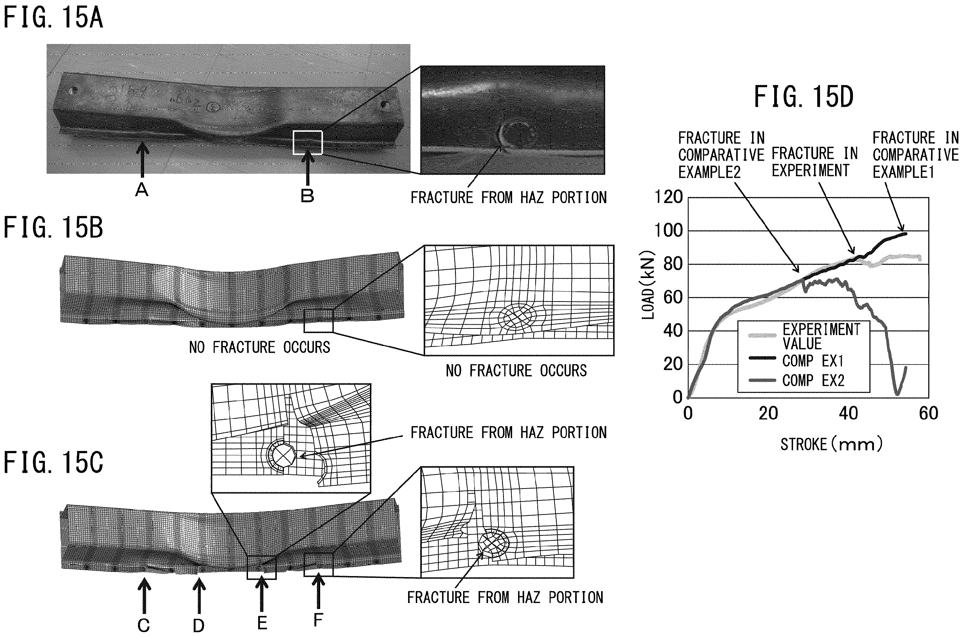

FIG. 15A to FIG. 15D are diagrams showing a comparison between the experiment results by the real hat member and the FEM analysis results of the comparative examples 1 and 2. FIG. 15A is a diagram showing the real hat member after the experiment, FIG. 15B is a diagram showing the FEM analysis results of the comparative example 1, FIG. 15C is a diagram showing the FEM analysis results of the comparative example 2, and FIG. 15D is a diagram showing a relationship between the pressing distance and the pressing reaction force of the pressing member 602. The diagram shown in FIG. 15A is the same as the diagram shown in FIG. 14A. In FIG. 15D, the horizontal axis represents the pressing distance of the pressing member 602, in other words, a stroke [mm], and the vertical axis represents the reaction force that occurs in the pressing jig, in other words, a load [kN].

As shown by arrows A and B in FIG. 15A, in the experiment results by the real hat member, fracture occurred at the two HAZ portions. Further, as shown in FIG. 15B, in the comparative example 1, in the range of the pressing distance in the experiment by the real hat member, no fracture occurred. Furthermore, as shown by arrows C to F in FIG. 15C, in the comparative example 2, fracture occurred at the four HAZ portions, larger in number than in the experiment results by the real hat member. As shown in FIG. 15D, in the comparative example 1, no fracture occurs, and therefore the load increases as the pressing distance (stroke) increases. On the other hand, the timing at which fracture occurs in the comparative example 2 is earlier than the timing at which fracture occurs in the experiment by the real hat member. Further, in the comparative example 2, the amount of a reduction in the load after the fracture is larger than the amount of a reduction in the load after the fracture in the experiment by the real hat member.

In the comparative example 1, the extraction of the HAZ portion and the definition of the material property are not performed, and therefore the fracture from the HAZ portion is not predicted, which occurred in the experiment, and the results are such that fracture does not occur at all and that the excessive load compared to that in the experiment occurs. Further, in the comparative example 2, the definition of the characteristics of the HAZ portion is performed but the limit line by the conventional Storen-Rice theoretical formula is used, and therefore the results are such that fracture was predicted excessively compared to the experiment and the number of times fracture occurs is doubled and the results are such that the load is reduced significantly compared to the experiment.

**Claims**

1. A fracture determination device comprising:

   a storage unit which stores element input information indicating material property and sheet thickness of a steel material having a heat affected zone and an element size in an analysis model used for a deformation analysis of the steel material by a finite element method, and reference forming limit value information indicating a reference forming limit value used as a forming limit value in a reference element size, which is an element size used as a reference;

   an element extraction unit which extracts elements included in the heat affected zone formed around a spot weld portion of the steel material;

   a reference forming limit value generation unit which generates the reference forming limit value in accordance with material property and the sheet thickness of the heat affected zone on the basis of the reference forming limit value information;

   a heat affected zone forming limit value generation unit which uses tensile strength of the steel material to change the reference forming limit value, predict a forming limit value in an element size of an element included in the heat affected zone, and generate a forming limit value in the heat affected zone;

   an analysis running unit which runs the deformation analysis by using the input information and outputs deformation information including strain of each element included in the heat affected zone;

   a principal strain determination unit which determines maximum principal strain and minimum principal strain of each element included in the heat affected zone; and

   a fracture determination unit which determines whether each element in the analysis model will fracture on the basis of maximum principal strain and minimum principal strain of each element for which the principal strain is determined and a heat affected zone forming limit line specified by the forming limit value in the heat affected zone.

2. The fracture determination program according to claim 1, wherein
   the element extraction unit has:

   a joint element extraction unit which extracts a joint element which specifies that two steel materials be joined;

   an annular ring specification unit which specifies an annular ring with a contact between the joint element and an element forming the steel material as being a center point; and

   an element determination unit which determines an element at least whose part is included in the annular ring to be an element forming the heat affected zone.

3. The fracture determination device according to claims 2, wherein
   the reference forming limit value generation unit has:

   an adjacent information acquisition unit which acquires material property and sheet thickness of the element adjacent to a contact point between the joint element and an element forming the steel material;

   a material property estimation unit which estimates material property of the heat affected zone from material property acquired by the adjacent information acquisition unit; and

   a forming limit value generation unit which generates the reference forming limit value in accordance with material property estimated by the material property estimation unit and sheet thickness acquired by the adjacent information acquisition unit.

4. The fracture determination device according to any one of claims 1 to 3, wherein
   the heat affected zone forming limit value generation unit has:

   an element size determination unit which determines an element size of an element included in the heat affected zone; and

   a forming limit value change unit which uses the element size and tensile strength of the steel material to change the reference forming limit value in accordance with the determined element size.

5. The fracture determination device according to claim 4, wherein
   the element size determination unit has:

   an element size extraction unit which extracts an element size of each element included in the heat affected zone; and
an element size arithmetic operation unit which performs arithmetic operation to obtain an element size of an element included in the heat affected zone from each of the extracted element sizes.

6. The fracture determination device according to any one of claims 1 to 5, wherein
the deformation analysis is a collision deformation analysis of a vehicle formed by the steel material.

7. The fracture determination device according to claims 1, wherein

a target forming limit value generation unit generates a target forming limit value by using a forming limit value prediction expression, which is a function of the element size and tensile strength of the steel material,
the forming limit value prediction expression is, in a case where $\rho$ is a strain ratio, M is an element size indicating a size of an element in an analysis model used in an analysis by the FEM, $\varepsilon_1$ is maximum principal strain in an element size M, and $\varepsilon_2$ is minimum principal strain in the element size M, represented by a first coefficient k1 and a second coefficient k2 as

[Mathematical expression 1]

$$\varepsilon_1 = k1 \cdot M^{-k2}$$

$$\varepsilon_2 = \rho\,\varepsilon_1$$

where the first coefficient k1 is represented by tensile strength TS of material of the steel sheet and coefficients $\gamma$ and $\delta$ as

[Mathematical expression 2]

$$k1 = \gamma TS + \delta$$

and
the second coefficient k2 is represented by maximum principal strain $\varepsilon_{1B}$ in the reference element size and a coefficient $\eta$ as

[Mathematical expression 3]

$$k2 = -\ln(\varepsilon_{1B} / (\gamma TS + \delta)) / \eta = -\ln(\varepsilon_{1B} / k1) / \eta$$

8. A fracture determination method comprising:

extracting an element included in the heat affected zone formed around a spot weld portion of a steel material;
generating a reference forming limit value in accordance with material property and the sheet thickness of the heat affected zone on the basis of reference forming limit value information indicating the reference forming limit value used as a forming limit value in a reference element size which is an element size used as a reference;
using the element size and tensile strength of the steel material to change the reference forming limit value, predict a forming limit value in an element size of an element included in the heat affected zone, and generate a forming limit value in the heat affected zone;

running a deformation analysis by using input information for the deformation analysis of the steel material by a finite element method including material property and sheet thickness of the steel material and outputting deformation information including strain of each element included in the heat affected zone;

determining maximum principal strain and minimum principal strain of each element included in the heat affected unit; and

determining whether each element in the analysis model will fracture on the basis of maximum principal strain and minimum principal strain of each element for which the principal strain is determined and a heat affected zone forming limit line specified by the heat affected forming limit value.

9. A fracture determination program for causing a computer to perform processing to:

extract an element included in the heat affected zone formed around a spot weld portion of a steel material;

generate a reference forming limit value in accordance with material property and the sheet thickness of the heat affected zone on the basis of reference forming limit value information indicating the reference forming limit value used as a forming limit value in a reference element size which is an element size used as a reference;

use the element size and tensile strength of the steel material to change the reference forming limit value, predict a forming limit value in an element size of an element included in the heat affected zone, and generate a forming limit value in the heat affected zone;

run a deformation analysis by using input information for the deformation analysis of the steel material by a finite element method including material property and sheet thickness of the steel material and output deformation information including strain of each element included in the heat affected zone;

determine maximum principal strain and minimum principal strain of each element included in the heat affected unit; and

determine whether each element in the analysis model will fracture on the basis of maximum principal strain and minimum principal strain of each element for which the principal strain is determined and a heat affected zone forming limit line specified by the heat affected forming limit value.

FIG. 1

# FIG. 2

FRACTURE DETERMINATION DEVICE

1

**PROCESSING UNIT** — 20

| | |
|---|---|
| INFORMATION ACQUISITION UNIT | 21 |

**ELEMENT EXTRACTION UNIT** — 22

| | |
|---|---|
| JOINT ELEMENT EXTRACTION UNIT | 221 |
| ANNULAR RING SPECIFICATION UNIT | 222 |
| ELEMENT DETERMINATION UNIT | 223 |

**REFERENCE FORMING LIMIT VALUE GENERATION UNIT** — 23

| | |
|---|---|
| ADJACENT INFORMATION ACQUISITION UNIT | 231 |
| MATERIAL CHARACTERISTICS ESTIMATION UNIT | 232 |
| FORMING LIMIT VALUE GENERATION UNIT | 233 |

**HEAT AFFECTED ZONE FORMING LIMIT VALUE GENERATION UNIT** — 24

| | |
|---|---|
| ELEMENT SIZE EXTRACTION UNIT | 241 |
| ELEMENT SIZE ARITHMETIC OPERATION UNIT | 242 |
| FORMING LIMIT VALUE CHANGE UNIT | 243 |

| | |
|---|---|
| SIMULATION RUNNING UNIT | 25 |
| PRINCIPAL STRAIN DETERMINATION UNIT | 26 |
| FRACTURE DETERMINATION UNIT | 27 |
| SIMULATION RESULT OUTPUT UNIT | 28 |

11 — COMMUNICATION UNIT

**STORAGE UNIT** — 12

| | |
|---|---|
| INPUT INFORMATION | 120 |
| REFERENCE FORMING LIMIT VALUE INFORMATION | 121 |
| HAZ PORTION CHARACTERISTICS TABLE | 122 |

13 — INPUT UNIT

14 — OUTPUT UNIT

15

# FIG. 3

START

S101 — ACQUIRE INPUT INFORMATION

S102 — ACQUIRE REFERENCE FORMING LIMIT VALUE INFORMATION

S103 — EXTRACTION OF ELEMENT INCLUDED IN HAZ PORTION

S104 — GENERATION OF REFERENCE FORMING LIMIT VALUE

S105 — GENERATION OF HEAT AFFECTED ZONE FORMING LIMIT VALUE

S106 — RUN FEM SIMULATION

S107 — DETERMINE MAXIMUM PRINCIPAL STRAIN AND MINIMUM PRINCIPAL STRAIN

S108 — WILL ELEMENT FRACTURE? — NO

YES

S109 — OUTPUT ELEMENT FRACTURE INFORMATION

S110 — OUTPUT DEFORMATION INFORMATION

S111 — IS SIMULATION TERMINATION CONDITION ESTABLISHED? — NO

YES

END

FIG. 4

```
                  ┌──────────────┐
                  │     S103     │
                  └──────┬───────┘
                         │
                         ▼
S201  ┌────────────────────────────────────────┐
      │        ACQUIRE INPUT INFORMATION        │
      └────────────────────┬───────────────────┘
                           │
                           ▼
S202  ┌────────────────────────────────────────┐
      │   ACQUIRE REFERENCE FORMING LIMIT VALUE │
      │               INFORMATION               │
      └────────────────────┬───────────────────┘
                           │
                           ▼
S203  ┌────────────────────────────────────────┐
      │   EXTRACT ELEMENT INCLUDED IN HAZ PORTION│
      └────────────────────┬───────────────────┘
                           │
                           ▼
                  ┌──────────────┐
                  │     END      │
                  └──────────────┘
```

FIG. 5A

FIG. 5B

FIG. 5C

FIG. 5D

EP 3 524 959 A1

# FIG. 6

S104

S301 ACQUIRE MATERIAL CHARACTERISTICS AND PLATE THICKNESS OF ELEMENT

S302 ESTIMATE MATERIAL CHARACTERISTICS OF HAZ PORTION

S303 GENERATE REFERENCE FORMING LIMIT VALUE

END

# FIG. 7

S105

S401 ACQUIRE MATERIAL CHARACTERISTICS AND PLATE THICKNESS OF ELEMENT

S402 ESTIMATE MATERIAL CHARACTERISTICS OF HAZ PORTION

S403 GENERATE HEAT AFFECTED ZONE FORMING LIMIT VALUE

END

# FIG. 8

2

FRACTURE DETERMINATION DEVICE

PROCESSING UNIT — 30

INFORMATION ACQUISITION UNIT — 21

11 — COMMUNICATION UNIT

ELEMENT EXTRACTION UNIT — 22

JOINT ELEMENT EXTRACTION UNIT — 221

ANNULAR RING SPECIFICATION UNIT — 222

ELEMENT DETERMINATION UNIT — 223

12

120

STORAGE UNIT

INPUT INFORMATION

REFERENCE FORMING LIMIT VALUE INFORMATION

HAZ PORTION CHARACTERISTICS TABLE

121          122

REFERENCE FORMING LIMIT VALUE GENERATION UNIT — 23

ADJACENT INFORMATION ACQUISITION UNIT — 231

MATERIAL CHARACTERISTICS ESTIMATION UNIT — 232

FORMING LIMIT VALUE GENERATION UNIT — 233

13 — INPUT UNIT

HEAT AFFECTED ZONE FORMING LIMIT VALUE GENERATION UNIT — 24

ELEMENT SIZE EXTRACTION UNIT — 241

ELEMENT SIZE ARITHMETIC OPERATION UNIT — 242

FORMING LIMIT VALUE CHANGE UNIT — 243

14 — OUTPUT UNIT

15

SIMULATION RUNNING UNIT — 25

PRINCIPAL STRAIN DETERMINATION UNIT — 26

FRACTURE DETERMINATION UNIT — 37

SIMULATION RESULTS OUTPUT UNIT — 28

HEAT AFFECTED ZONE FORMING LIMIT STRESS GENERATION UNIT — 34

STRAIN-STRESS CONVERSION UNIT — 35

# FIG. 9

START

S501 — ACQUIRE INPUT INFORMATION

S502 — ACQUIRE REFERENCE FORMING LIMIT VALUE INFORMATION

S503 — EXTRACTION OF ELEMENT INCLUDED IN HAZ PORTION

S504 — GENERATION OF REFERENCE FORMING LIMIT VALUE

S505 — GENERATION OF HEAT AFFECTED ZONE FORMING LIMIT VALUE

S506 — GENERATE HEAT AFFECTED ZONE FORMING LIMIT STRESS

A

A

S507 — RUN FEM SIMULATION

S508 — DETERMINE MAXIMUM PRINCIPAL STRAIN AND MINIMUM PRINCIPAL STRAIN

S509 — CONVERT MAXIMUM PRINCIPAL STRAIN AND MINIMUM PRINCIPAL STRAIN INTO PRINCIPAL STRESS

S510 — WILL ELEMENT FRACTURE? — NO

YES

S511 — OUTPUT ELEMENT FRACTURE INFORMATION

S512 — OUTPUT DEFORMATION INFORMATION

S513 — IS SIMULATION TERMINATION CONDITION ESTABLISHED? — NO

YES

END

EP 3 524 959 A1

FIG. 10A

FIG. 10B

FIG. 10C

FIG. 11

100

1          113          111              114          112

```
┌──────────────┐       ┌──────────────┐              ┌──────────────┐
│   FRACTURE   │       │     MOLD     │      ╲╱      │     MOLD     │
│ DETERMINATION│───────│  DESIGNING   │──────╳───────│MANUFACTURING │
│    DEVICE    │       │    DEVICE    │      ╱╲      │    DEVICE    │
└──────────────┘       └──────────────┘              └──────────────┘
```

FIG. 12A

FIG. 12B

EP 3 524 959 A1

## FIG. 13

|  | Embodiment example1 | Embodiment example2 | Comparative example1 | Comparative example2 |
|---|---|---|---|---|
| Mesh shape | Web shape | Grid shape | Web shape | Web shape |
| Definition of HAZ portion | By the present invention, the element is extracted and the material characteristics are specified | By the present invention, the element is extracted and the material characteristics are specified | None | By the present invention, the element is extracted and the material characteristics are specified |
| Element size of HAZ portion | 1.1mm | 1.3mm | — | 1.1mm |
| Forming limit line | Limit line by the prediction expression of the present invention is used | Limit line by the prediction expression of the present invention is used | Limit line by the prediction expression of the present invention is used | Limit line by the conventional Storen-Rice theoretical formula is used |
| FEM model (enlarged display of spot weld portion) | Mother material portion · HAZ portion · Nugget portion | Mother material portion · HAZ portion · Nugget portion | Mother material portion · Nugget portion | HAZ portion · Nugget portion |

EP 3 524 959 A1

FIG. 14A

A    B

FRACTURE FROM HAZ PORTION

FIG. 14B

C    D

FRACTURE FROM HAZ PORTION

FIG. 14C

E    F

FRACTURE FROM HAZ PORTION

FIG. 14D

FRACTURE IN
EMBODIMENT EXAMPLE1

FRACTURE IN          FRACTURE IN
EXPERIMENT           EMBODIMENT EXAMPLE2

EXPERIMENT
VALUE
INV EX1
INV EX2

STROKE(mm)

LOAD(kN)

EP 3 524 959 A1

FIG. 15A

FIG. 15B

FIG. 15C

FIG. 15D

A

B

FRACTURE FROM HAZ PORTION

NO FRACTURE OCCURS

NO FRACTURE OCCURS

FRACTURE FROM HAZ PORTION

C   D   E   F

FRACTURE FROM HAZ PORTION

FRACTURE FROM HAZ PORTION

FRACTURE IN COMPARATIVE EXAMPLE1

FRACTURE IN EXPERIMENT

FRACTURE IN COMPARATIVE EXAMPLE2

EXPERIMENT VALUE
COMP EX1
COMP EX2

LOAD(kN)

120
100
80
60
40
20
0

0   20   40   60

STROKE(mm)

<table>
<tr><td colspan="2">**INTERNATIONAL SEARCH REPORT**</td><td colspan="2">International application No.<br>PCT/JP2017/036383</td></tr>
</table>

**A. CLASSIFICATION OF SUBJECT MATTER**
G01N3/00(2006.01)i, G06F17/50(2006.01)i

According to International Patent Classification (IPC) or to both national classification and IPC

**B. FIELDS SEARCHED**

Minimum documentation searched (classification system followed by classification symbols)
G01N3/00, G06F17/50

Documentation searched other than minimum documentation to the extent that such documents are included in the fields searched
```
Published examined utility model applications of Japan      1922-1996
Published unexamined utility model applications of Japan    1971-2017
Registered utility model specifications of Japan            1996-2017
Published registered utility model applications of Japan    1994-2017
```

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-107322 A (SUMITOMO METAL INDUSTRIES, LTD.) 08 May 2008, paragraphs [0036]-[0093] (Family: none) | 1-9 |
| A | JP 2015-17817 A (NIPPON STEEL & SUMITOMO METAL CORP.) 29 January 2015, paragraphs [0021]-[0042] (Family: none) | 1-9 |
| A | WO 2016/136553 A1 (NIPPON STEEL & SUMITOMO METAL CORP.) 01 September 2016, paragraphs [0031]-[0045] & CA 2977029 A1, paragraphs [0031]-[0045] & CN 107250758 A & KR 10-2017-0105112 A | 1-9 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search | Date of mailing of the international search report |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 524 959 A1**

**Patent documents cited in the description**

- JP 2012132902 A

- JP 2008107322 A